# EUROPÄISCHE PATENTSCHRIFT

(11) **EP 3 620 248 B1**
(45) Veröffentlichungstag und Bekanntmachung des Hinweises auf die Patenterteilung: **22.06.2022**
(21) Anmeldenummer: 18193443.1
(22) Anmeldetag: 10.09.2018
(51) Int. Cl.: B23B 31/16

(54) **KOPPLUNGS-EINRICHTUNG**
COUPLING DEVICE
DISPOSITIF D'ACCOUPLEMENT

(43) Veröffentlichungstag der Anmeldung: 11.03.2020
(73) Patentinhaber: SMW-Autoblok Spannsysteme GmbH, 88074 Meckenbeuren (DE)
(72) Erfinder: MAURER, Eckhard, 88094 Oberteurigen (DE)
(74) Vertreter: Christ, Niko

(56) Entgegenhaltungen:
- DE-A1- 10 307 565
- US-A1- 2011 006 490

## Beschreibung

Die Erfindung bezieht sich auf ein induktiv betriebenes Spannfutter zur Zentrierung eines zu bearbeitenden Werkstückes im Raum nach dem Oberbegriff des Patentanspruchs 1.

Ein solches Spannfutter benötigt Energie- und/oder Signalübertragungen, die berührungslos zu übertragen sind, und ist zur Verwendung in einem Bearbeitungszentrum bzw. einem Dreh- und/oder Fräszentrum verwendbar. Beispielsweise der EP 3 028 804 B1 eine solche zu entnehmen. Dabei werden Signale und Spannungen induktiv und damit berührungslos von einem festen Maschinen-Gestell zu einem rotierenden Bearbeitungszentrum, insbesondere einem Spannfutter, sowohl in Richtung des Spannfutters als auch umgekehrt übertragen. Die jeweiligen Bearbeitungszentren bzw. Spannfutter weisen Bauteile, insbesondere Spannbacken, auf die mittels eines Elektromotors verfahrbar oder beweglich in einem Futterkörper abgestützt sind. Die Elektromotoren werden anschließend bei Erreichen einer vorgegebenen IST-Position aus Sicherheitsgründen abgeschaltet, die Spannbacken werden mittels Federpaketen und mechanischen Reibbremsen arretiert. Die Elektromotoren drücken demnach die Federpakete während des Spannvorganges zusammen, so dass diese die Spannkraft für die Spannbacken aufbringen. Nach dem Abschalten der Elektromotoren verhindern die mechanischen Reibbremsen ein Verrutschen oder Lösen der Spannbacken.

Der EP 3 028 804 B1 ist eine Übertragungsanordnung, insbesondere zur Energie- und/oder Signalübertragung zu entnehmen. Diese Übertragungseinrichtung kann mit einer Spanneinheit, die ein Außengehäuse von zylindrischer Grundform aufweist, verwendet werden.

Darüber hinaus sind die Positionen der Spannbacken während des Bearbeitungsvorganges permanent zu überwachen, denn die Spannbacken arretierenden ein zu bearbeitendes Werkstück zentriert im Raum und wenn sich die Position einer der Spannbacken während des Bearbeitungsvorganges verändert, dann drohen Bearbeitungsfehler oder gar ein Lösen des eingespannten Werkstückes. Um die entsprechenden Betriebszustände und Positionen der Spannbacken bzw. Elektromotoren, die in dem Futterkörper des Spannfutters eingebaut sind, permanent überwachen zu können, sind diesen Bauteilen eine Vielzahl von Messsensoren zugeordnet, die entsprechende Messdaten generieren und diese über die induktiven Übertragungseinrichtungen, die zweiteilig ausgestaltet sind, nämlich einerseits in dem rotierenden Spannfutter und andererseits in dem feststehenden Traggestell, von diesen übertragen sind. Die beiden Übertragungseinrichtungen sind demnach fluchtend zueinander auszurichten, so dass durch die räumliche Trennung der beiden Übertragungseinrichtungen eine Rotation des Spannfutters möglich ist und gleichzeitig eine induktive Übertragung von Messsignalen, Messdaten und/oder Spannungen für den Betrieb der Elektromotoren übertragen werden können.

Solche induktiv betriebenen Übertragungsanordnungen haben sich in der Praxis zwar bewährt, jedoch hat sich herausgestellt, dass jeder Benutzer solcher Bearbeitungszentren unterschiedliche elektrische Geräte verwendet, so dass jede Anwendung kundenspezifisch neu zu programmieren ist. Ein unmittelbares in Betrieb nehmen des Spannfutters kann somit nicht erfolgen; vielmehr sind zeitaufwendige und komplexe Programmierarbeiten erforderlich, um die Schnittstelle zwischen dem Spannfutter und einem von einem Menschen zu bedienende Steuereinrichtung einzustellen.

Es ist daher Aufgabe der Erfindung ein induktiv betriebenes Spannfutter der eingangs genannten Gattung zur Verfügung zu stellen, durch das gewährleistet ist, dass unabhängig von den kundenspezifischen elektrischen Geräten unverzüglich nach Kopplung der kundenseitig vorhandenen Steuereinrichtungen mit dem Spannfutter ein vollständiger Betrieb des Spannfutters und dessen Überwachung während eines Bearbeitungsvorganges erreicht ist.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zwischen der zweiten induktiven Übertragungseinrichtung und der Steuereinrichtung mindestens eine programmierbare Schnittstelle vorgesehen ist, die mit der zweiten induktiven Übertragungseinrichtung und der Steuereinrichtung elektrisch verbunden ist, dass jede Schnittstelle eine oder mehrere Befehls- und Steuerprogramme aufweist, durch die die Einstellung des Spannfutters durch die Steuereinrichtung erfolgt bzw. auswählbar ist, dass eine Vielzahl von den Spannbacken, Elektromotoren und/oder dem Spannfutter zugeordnete Messsensoren vorgesehen sind , durch die deren Betriebszustände erfasst sind und die an die jeweilige Schnittstelle übertragen sind, dass durch die jeweilige Schnittstelle ein Vergleich zwischen dem in den Befehlsprogrammen hinterlegten IST-Daten und der von den Messsensoren ermittelten Messdaten erfolgt und dass durch diesen Abgleich des ausgewählten Betriebszustandes des Spannfutters mit einem tatsächlichen Betriebszustand Datensätze generiert sind, die von der jeweiligen Schnittstellte ausgewertet und an die Steuereinrichtung des Spannfutters, die Spannbacken oder die Elektromotoren weitergeleitet sind, kann das Spannfutter ohne Programmieraufwand an eine kundenspezifische Steuereinrichtung angeschlossen sein und unverzüglich in Betrieb genommen werden, da die für die Steuerung und Überwachung des Spannfutters erforderlichen Befehlsdaten und Überwachungswerte von der Schnittstelle sowohl in Richtung der Steuereinrichtung als auch in Richtung des Spannfutters nach dessen Anschluss an die zweite induktive Übertragungeinrichtung und die Steuereinrichtung erfolgt. Folglich kann herstellerseitig das Spannfutter und die programmierbare Schnittstelle entsprechend zusammengebaut und zusammengeschaltet sein und sobald das Spannfutter mit der Schnittstelle an den jeweiligen Kunden ausgeliefert wird, kann der Anschluss der Steuereinrichtung an die jeweilige Schnittstelle erfolgen, wodurch unverzüglich das Spannfutter in Betrieb genommen werden kann, ohne dass zeitaufwendige und komplexe Programmierarbeiten bzw. Anpassungen der jeweiligen kundenspezifischen Steuereinrichtungen an das gelieferte Spannfutter notwendig sind.

Dem Spannfutter, den Spannbacken und/oder den Elektromotoren, durch die die jeweiligen Spannbacken bewegt und in ihrer Spannstellung festgesetzt sind, sind eine Vielzahl von Messsensoren zugeordnet, durch die permanent die Positionen, die Kraftverläufe und/oder sonstige für den Betrieb des Spannfutters erforderliche Messdaten generiert sind. Demnach wird der Betriebszustand des Spannfutters und dessen Bauteile überwacht und ein Messdatensatz generiert, der durch die beiden induktiven Übertragungseinrichtungen von dem Spannfutter bzw. deren jeweiligen Messsensoren an die Schnittstelle weitergeleitet sind. Die Schnittstelle verarbeitet und vergleicht die erhaltenen Messdatensätze mit hinterlegten Datensätzen, die dem ausgewählten Betriebszustand des Spannfutters entsprechen. Sollten die gemessenen Datensätze mit den hinterlegten Datensätzen übereinstimmen, leitet die jeweilige Schnittstelle dieses Ergebnis an die Steuereinrichtung weiter, so dass der tatsächliche Bearbeitungsprozess freigegeben werden kann, denn das Spannfutter zentriert das zu bearbeitende Werkstück korrekt.

Oftmals ist es erforderlich, dass die von den Schnittstellen ermittelten Abgleiche redundant überprüft sind, so dass es besonders vorteilhaft ist, wenn eine zweite Schnittstelle vorgesehen ist, durch die unabhängig von der ersten Schnittstelle Messdatensätze von den Messsensoren generiert und mit dem hinterlegten Befehlsprogramm verglichen sind. Stimmen die von den beiden Schnittstellen durch den Abgleich ermittelten Messdatensätze überein, wird diese Information an die Steuereinrichtung übertragen und der Spannzustand des Spannfutters ist somit entsprechend überprüft und der Bearbeitungsprozess kann eingeleitet werden.

Der jeweilige Benutzer der erfindungsgemäßen Kopplungs-Einrichtung hat demnach lediglich über die Steuereinrichtung auszuwählen, welches der hinterlegten Betriebszustände für das verwendete Spannfutter eingesetzt werden und welche Spannkraft durch die Spannbacken auf das zu bearbeitende Werkstück ausgeübt werden soll. Folglich hat der jeweilige Benutzer ausschließlich eine Auswahl und die Einstellung der Spannkraft vorzunehmen. Demnach kann die von dem Hersteller des Spannfutters ausgelieferte Schnittstelle an jede beliebige Steuereinrichtung eines Kunden angeschlossen sein und mit dieser entsprechend kommunizieren. Die tatsächlichen Auswertungen der ermittelten Messergebnisse und der Abgleich der hinterlegten Datensätzen mit dem tatsächlichen Betriebszustand des Spannfutters erfolgt ausschließlich in der Schnittstelle.

In der Zeichnung ist eine Kopplungs-Einrichtung dargestellt, die nachfolgend näher erläutert ist. Im Einzelnen zeigt:
- Figur 1: eine schematische Darstellung von zwei über jeweils eine Schnittstelle mit einer Steuereinrichtung verbundenen Spannfutter,
- Figur 2: eine vergrößerte Darstellung der Schnittstelle gemäß Figur 1 und
- Figur 3: eine redundante Überprüfung der Funktionsweise der Schnittstellen gemäß Figur 1.

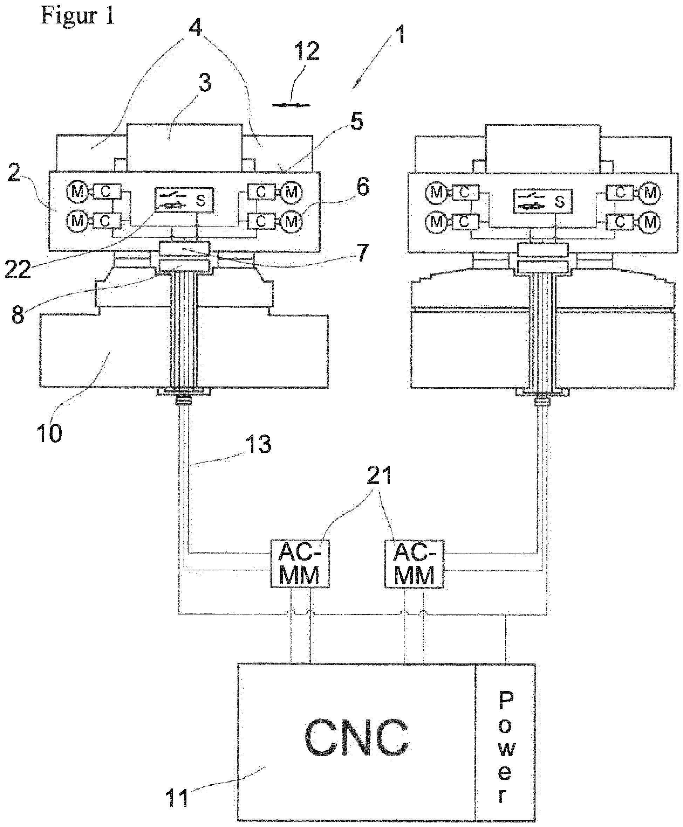

Aus Figur 1 ist eine Kopplungs-Einrichtung 1 zu entnehmen, durch die ein Spannfutter 2 an eine kundenseitige Steuereinrichtung 11 angeschlossen und überwacht werden soll. Das Spannfutter 2 dient dazu, ein zu bearbeitendes Werkstück 3 im Raum zentriert zu halten, während dieses von einer nicht dargestellten Werkzeugmaschine bearbeitet ist. Das Spannfutter 2 besteht aus einem oder mehreren Spannbacken 4, die radial in Richtung des Werkstückes 3 vorfahrbar sind, so dass der Durchmesser, der von den Spannbacken 4 eingeschlossen bzw. gebildet ist, verändert werden kann, um das Werkstück 3 aus dem Spannfutter 2 zu entfernen bzw. dieses lageorientiert zu fixieren. Die Spannbacken 4 sind in Führungsnuten 5 beweglich gehalten und werden durch jeweils einen diesen zugeordneten Elektromotor 6 angetrieben.

Um den Elektromotor 6 mit der notwendigen Spannung zu versorgen, ist in dem Spannfutter 2 eine erste Übertragungseinrichtung 7 vorgesehen, die über elektrische Leitungen 13 mit den Elektromotoren 6 und einer Vielzahl von Messsensoren 22 verbunden ist. Durch die Messsensoren 22 sollen die Position der Spannbacken 4 und die Spannungen der Elektromotoren 6 bzw. deren Umdrehungen gemessen sein. Auch sonstige für den Betrieb des Spannfutters 2 erforderliche Messdaten werden von den Messsensoren 22 erfasst und an die erste Übertragungseinrichtung 7 weitergeleitet.

Da das Spannfutter 2 während des Bearbeitungsvorganges rotiert, ist dieses räumlich von einem Maschinen- oder Traggestell 10 zu beabstanden. Dem Gestell 10 ist eine zweite Übertragungseinrichtung 8 zugeordnet, die fluchtend zu der ersten Übertragungseinrichtung 7 des Spannfutters 2 angeordnet ist. Zwischen den beiden Übertragungseinrichtungen 7, 8 entsteht somit ein Luftspalt, so dass das Spannfutter 2 relativ zu dem Gestell 10 bewegbar ist. Aufgrund der induktiven Übertragung zwischen den beiden Übertragungseinrichtungen 7, 8 können demnach zwischen diesen die von den Messsensoren 22 ermittelten Messdaten sowie die für den Betrieb der Elektromotoren 6 erforderlichen Spannungen übertragen sein. Auch die an der Steuereinrichtung 11 eingegebene Datensätze können somit an das Spannfutter 2 weitergegeben werden.

Die zweite Übertragungseinrichtung 8 ist mittels der elektrischen Leitungen 13 an eine programmierbare Schnittstelle 21 angeschlossen. Die jeweilige Schnittstelle 21 ist mit einer elektrischen Leitung 13 an die Steuereinrichtung 11 gekoppelt.

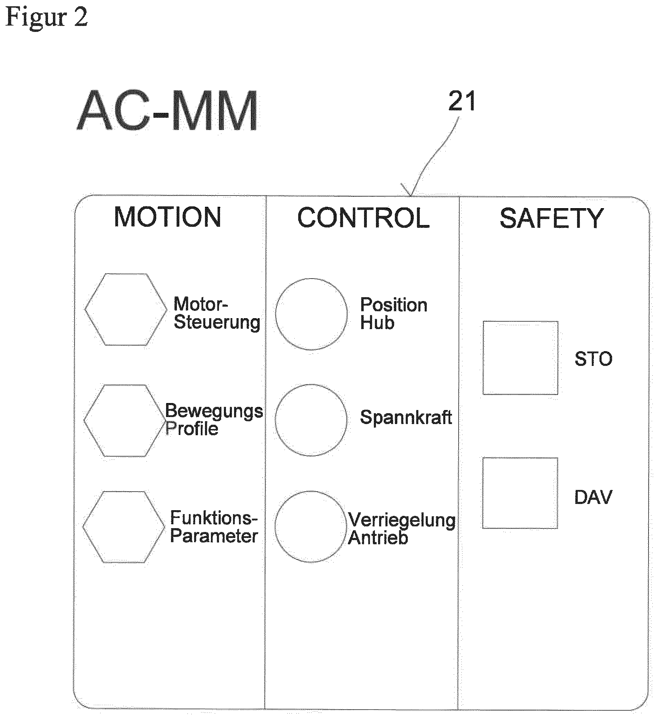

In Figur 2 ist schematisch der Aufbau der programmierbaren Schnittstelle 21 zu entnehmen. Die Schnittstelle 21 weist dabei mehrere Befehlsebenen auf, nämlich Motion, control und safety. Diese Befehlsebenen dienen dazu, das Spannfutter 2 zu steuern und permanent zu überwachen. Insbesondere die Positionen der Spannbacken 4 und die Spannungen an den Elektromotoren 6, die von den Messsensoren 22 permanent ermittelt sind, werden an die Schnittstelle 21 weitergeleitet und von dieser ausgewertet.

In der Schnittstelle 21 sind mehrere Betriebsdatensätze für das jeweilige Spannfutter 2 hinterlegt. Der jeweilige Benutzer wählt über die Steuereinrichtung 11 eines der hinterlegten Betriebsprogramme aus und stellt zudem die gewünschte Spannkraft an der Steuereinrichtung 11 ein, die von dieser über die Schnittstelle 21 an die jeweiligen Elektromotoren 6 weitergeleitet ist. Sobald diese Einstellungsparameter ausgewählt bzw. eingestellt sind, sind die Elektromotoren 6 durch die Schnittstelle 21 aktiviert, so dass die Spannbacken 4 in Richtung des zu bearbeitenden Werkstückes 3 verfahren sind. Diese Bewegungszustände- bzw. Abläufe der Spannbacken 4 und der Elektromotoren 6 sind in der Befehlsebene Motion hinterlegt. Wenn diese Abläufe mit den hinterlegten Datensätzen übereinstimmen, kann durch die Schnittstelle 21 festgestellt sein, dass diese Bewegungsabläufe den hinterlegten Bewegungsabläufen entsprechen, wodurch eine erste Sicherheitsfreigabe erfolgt.

Sobald die Spannbacken 4 ihre Spannposition erreicht haben, dies kann beispielsweise durch einen Anstieg der Spannung an den Elektromotoren 6 durch die Messsensoren 22 festgestellt sein, sind die Elektromotoren 6 abzuschalten und festzusetzen, so dass auch die Spannbacken 4 nicht mehr verfahrbar sondern vielmehr arretiert sind. Diese Betriebszustände sind in der Befehlsebenen control hinterlegt und die von den Messsensoren 22 während des Spannungszustandes permanent erfassten Messdaten werden mit den hinterlegten Messdaten in der jeweilige Schnittstelle 21 abgeglichen. Sollten keine entsprechenden Abweichungen zwischen den hinterlegten Datensätzen des Betriebszustandes mit den tatsächlichen Datensätzen des Betriebszustandes vorhanden sein, erfolgt durch die Schnittstelle 22 eine weitere Sicherheitsfreigabe, so dass der Bearbeitungsprozess nicht unterbrochen ist bzw. beim Zustellen der Spannbacken 4 freigegeben werden kann.

Um während des Bearbeitungsprozesses eine Überwachung der Funktionsweise des Spannfutters 2 zu gewährleisten, ist die weitere Befehlsebenen safety in der Schnittstelle 21 vorgesehen, durch die insbesondere mechanische Reibbremsen überwacht sind. Diese Reibbremsen überwachen die Arretierung der Spannbacken 4. Die Elektromotoren 6 werden nämlich nach dem Erreichen der Spannposition abgeschaltet-Die Elektromotoren 6 drücken während des Spannvorgangs Federpakete zusammen, die anschließend eine erforderliche Spannkraft auf die Spannbacke 4 ausüben. Somit sind durch die jeweilige Schnittstelle 21 auch diese Messdaten zu erfassen und an die Steuereinrichtung 11 weiterzuleiten.

Die von den Messsensoren 22 permanent ermittelten Messdaten werden in einem hinterlegten Betriebszustand-Datensatz verglichen und sobald eine entsprechend vorgegebene Abweichung vorhanden sein sollte, dann erzeugt die jeweilige Schnittstelle 21 ein entsprechendes Steuersignal, wodurch der Bearbeitungsprozess durch die Steuereinrichtung 11 unterbrochen ist. Solange die erhaltenen Messdatensätze mit den hinterlegten Betriebszuständen in Form von entsprechenden Datensätzen übereinstimmen, ist der Bearbeitungsprozess nicht gestört und kann fortgesetzt werden.

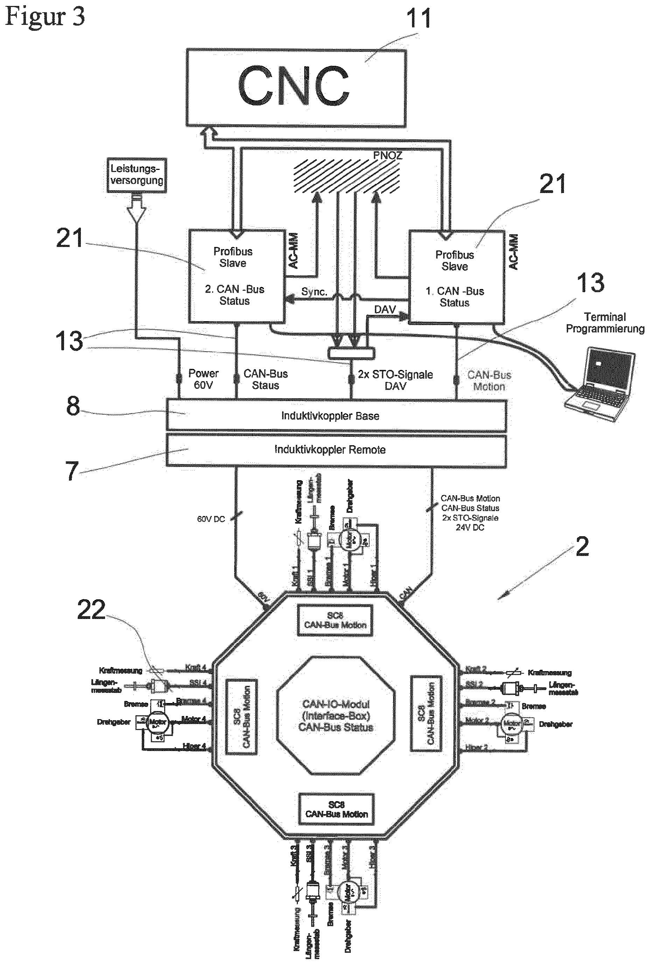

In Figur 3 ist eine redundante Überwachung des Spannfutters 2 dargestellt, denn zwei Schnittstellen 21 sind mit der zweiten induktiven Übertragungseinrichtung 8 elektrisch gekoppelt. Beide der Schnittstellen 21 erhalten unabhängig voneinander die Messdatensätze der Messesensoren 22 und werten diese unabhängig voneinander aus. Die beiden Schnittstellen 21 sind miteinander elektrisch verbunden und sobald die Abgleiche zwischen den erhaltenen Messdatensätzen mit den hinterlegten Betriebszuständen durchgeführt ist, kommunizieren die Schnittstellen 21 miteinander und wenn deren Messergebnisse bzw. Abgleiche übereinstimmen, dann erhält die Steuereinrichtung 11 ein Freigabesignal, so dass der Bearbeitungsprozess eingeleitet werden kann, da die Spannfutter 2 in ihrer Spannposition ausgerichtet sind. Wenn jedoch die Messergebnisse bzw. Abgleiche in den beiden Schnittstellen 21 voneinander abweichen sollten, dann ist der Bearbeitungsprozess zu unterbrechen bzw. kann nicht freigegeben werden, da möglicherweise eine Funktionsstörung an dem Spannfutter 2 oder deren Spannbacken 4 bzw. Elektromotoren 6 vorhanden ist. Eine solche Funktionsstörung ist zunächst zu überprüfen.

Die beiden zusammengeschalteten Schnittstellen 21 erhöhen demnach die Sicherheit für den Betrieb und die Einstellung des Spannfutters 2, sie haben demnach eine redundante die Sicherheit erhöhende Funktion. Beide Schnittstellen 21 arbeiten unabhängig voneinander und erhalten die von den Messsensoren 22 ermittelten Messdaten.

## Patentansprüche

1. Induktiv betriebenes Spannfutter (2) zur Zentrierung eines zu bearbeitenden Werkstückes (3) im Raum, umfassend:
- eine Kopplungs-Einrichtung (1) für eine Mensch-Maschine-Schnittstelle (21),
- mindestens eine bewegliche Spannbacke (4),
- einen mit jedem der beweglichen Spannbacken (4) trieblich verbundenen Elektromotor (6), der in dem Spannfutter (2) eingebaut ist und durch den jede bewegliche Spannbacke (4) angetrieben oder festgesetzt ist,
- eine dem Spannfutter (2) zugeordnete erste induktive Übertragungseinrichtung (7),
- einem von dem Spannfutter (2) räumlich getrenntes Trag- oder Maschinen-Gestell (10),
- eine dem Gestell (10) zugeordnete zweite induktive Übertragungseinrichtung (8), die im Bereich der ersten induktiven Übertragungseinrichtung (7) des Spannfutters angeordnet ist und mit dieser induktiv Mess-Signale und Spannungen austauscht und
- einer externen Steuereinrichtung (11), durch die für die Bedienung und Einstellung der Spannbacken (4) sowie für den Betrieb und Arretierung der Elektromotoren (6) erforderliche Befehls- und Überwachungsdaten eingebbar und/oder ablesbar sind,
**dadurch gekennzeichnet,**
- **dass** zwischen der zweiten induktiven Übertragungseinrichtung (8) und der Steuereinrichtung (11) mindestens eine programmierbare Schnittstelle (21) vorgesehen ist, die mit der zweiten induktiven Übertragungseinrichtung (8) und der Steuereinrichtung (11) elektrisch verbunden ist,
- **dass** jede der Schnittstellen (21) eine oder mehrere Befehls- und Steuerprogramme aufweist, durch die die Einstellung des Spannfutters (2) durch die Steuereinrichtung (11) erfolgt bzw. auswählbar ist,
- **dass** eine Vielzahl von den Spannbacken (4), Elektromotoren (6) und/oder dem Spannfutter (2) zugeordnete Messsensoren (22) vorgesehen sind, durch die deren Betriebszustände erfasst und an die jeweilige Schnittstelle (21) übertragen sind,
- **dass** durch die jeweilige Schnittstelle (21) ein Vergleich zwischen dem in den Befehlsprogrammen hinterlegten IST-Daten und der von den Messsensoren (22) ermittelten Messdaten erfolgt,
- und **dass** durch diesen Abgleich des ausgewählten Betriebszustandes des Spannfutters (2) mit einem tatsächlichen Betriebszustand Datensätze generiert sind, die von der jeweiligen Schnittstellte (21) ausgewertet und an die Steuereinrichtung (11) des Spannfutters (2), die Spannbacken (4) oder die Elektromotoren (6) weitergeleitet sind.

2. Kopplungs-Einrichtung nach Anspruch 1,
**dadurch gekennzeichnet,**
**dass** zwei Schnittstellen (21) unabhängig voneinander den Abgleich zwischen den tatsächlichen Betriebszuständen des Spannfutters (2) und den vorgegebenen Betriebszuständen durchführen.

3. Kopplungs-Einrichtung nach Anspruch 2,
**dadurch gekennzeichnet,**
**dass** die Schnittstellen (21) zusammengeschaltet sind, derart, dass die jeweiligen Ergebnisse miteinander verglichen sind.

4. Kopplungs-Einrichtung Nach Anspruch 3,
**dadurch gekennzeichnet,**
**dass** die Freigabe für den Beginn des Bearbeitungsprozesses oder die Abschaltung des Bearbeitungsprozesses derart durch die Schnittstellen (21) überwacht und vorgegeben ist, dass bei einer Abweichung der Datensätze zwischen zwei Schnittstellen (21) der Bearbeitungsprozess selbsttätig unterbrochen oder bei Übereinstimmung freigegeben ist.

5. Kopplungs-Einrichtung nach einem der vorgenannten Ansprüche,
**dadurch gekennzeichnet,**
**dass** in der jeweiligen Schnittstelle (21) Datensätze in Bezug auf die Bewegung und Position der Spannbacken (4), der Betriebszustände der Elektromotoren (6) und der Spannkraft der Spannbacken (4) hinterlegt sind und dass die Datensätze mit den gemessen Messdaten, die von den Messsensoren (22) erfasst sind, permanent miteinander abgeglichen sind.

## Claims

1. Inductively operated chuck (2) for spatially centering a workpiece (3) to be machined, comprising:
- a coupling device (1) for a man-machine interface (21),
- at least one movable clamping jaw (4),
- an electric motor (6) which is drivingly connected to each of the movable clamping jaws (4) and is installed in the chuck (2), and by means of which each movable clamping jaw (4) is driven or fixed,
- a first inductive transmission device (7) associated with the chuck (2),
- a support or machine frame (10) which is spatially separated from the chuck (2),
- a second inductive transmission device (8) which is associated with the frame (10) and which is arranged in the region of the first inductive transmission device (7) of the chuck and inductively exchanges measurement signals and voltages therewith, and
- an external control device (11), by means of which the command and monitoring data required for operating and adjusting the clamping jaws (4) and for operating and locking the electric motors (6) can be input and/or read,
**characterized in that**
- at least one programmable interface (21) is provided between the second inductive transmission device (8) and the control device (11), which programmable interface is electrically connected to the second inductive transmission device (8) and the control device (11),
- each of the interfaces (21) has one or more command and control programs, by means of which the adjustment of the chuck (2) is carried out or can be selected by the control device (11),
- a large number of measuring sensors (22) assigned to the clamping jaws (4), electric motors (6) and/or the chuck (2) are provided, by means of which the operating states of said elements are recorded and transmitted to the relevant interface (21),
- a comparison between the actual data stored in the command programs and the measurement data determined by the measurement sensors (22) is carried out by the relevant interface (21),
- and **in that** data sets are generated by this comparison of the selected operating state of the chuck (2) with an actual operating state, which data sets are evaluated by the relevant interface (21) and are forwarded to the control device (11) of the chuck (2), the clamping jaws (4) or electric motors (6).

2. Coupling device according to claim 1,
**characterized in that**
two interfaces (21) carry out the comparison between the actual operating states of the chuck (2) and the specified operating states independently of one another.

3. Coupling device according to claim 2,
**characterized in that**
the interfaces (21) are interconnected in such a way that the respective results are compared with one another.

4. Coupling device according to claim 3,
**characterized in that**
the enabling of the start of the machining process or the shutdown of the machining process is monitored and specified by the interfaces (21) in such a way that the machining process is automatically interrupted in the case of a deviation of the data sets between two interfaces (21) or is enabled in the case that the data sets match.

5. Coupling device according to any of the preceding claims,
**characterized in that**
data sets relating to the movement and position of the clamping jaws (4), the operating states of the electric motors (6), and the clamping force of the clamping jaws (4) are stored in the relevant interface (21), and **in that** the data sets having the measured measurement data captured by the measuring sensors (22) are continuously compared with one another.

## Revendications

1. Mandrin de serrage à fonctionnement inductif (2) permettant le centrage spatial d'une pièce (3) à usiner, comprenant :
- un dispositif d'accouplement (1) destiné à une interface homme-machine (21),
- au moins une mâchoire de serrage mobile (4),
- un moteur électrique (6) relié en entraînement à chacune des mâchoires de serrage mobiles (4), lequel est installé dans le mandrin de serrage (2) et par lequel chaque mâchoire de serrage mobile (4) est entraînée ou fixée,
- un premier dispositif de transmission inductif (7) associé au mandrin de serrage (2),
- un châssis de support ou de machine (10) séparé spatialement du mandrin de serrage (2),
- un second dispositif de transmission inductif (8) associé au châssis (10), lequel second dispositif de transmission inductif est disposé dans la zone du premier dispositif de transmission inductif (7) du mandrin de serrage et échange avec celui-ci des signaux de mesure et des tensions par induction et
- un dispositif de commande externe (11) par lequel des données d'instructions et de surveillance nécessaires à l'utilisation et au réglage des mâchoires de serrage (4) ainsi qu'au fonctionnement et au blocage des moteurs électriques (6) peuvent être saisies et/ou lues,
**caractérisé en ce**
- **qu'**au moins une interface (21) programmable est prévue entre le second dispositif de transmission inductif (8) et le dispositif de commande (11), laquelle est reliée électriquement au second dispositif de transmission inductif (8) et au dispositif de commande (11),
- **que** chacune des interfaces (21) présente un ou plusieurs programmes d'instructions et de commande, par lesquels le réglage du mandrin de serrage (2) s'effectue ou peut être sélectionné par le dispositif de commande (11),
- **qu'**une pluralité de capteurs de mesure (22) associés aux mâchoires de serrage (4), aux moteurs électriques (6) et/ou au mandrin de serrage (2) sont prévus, au moyen desquels leurs états de fonctionnement sont enregistrés et transmis à l'interface (21) respective,
- **qu'**une comparaison entre les données réelles stockées dans les programmes d'instructions et les données de mesure déterminées par les capteurs de mesure (22) est effectuée par l'interface (21) respective,
- et **que**, grâce à ladite comparaison de l'état de fonctionnement sélectionné du mandrin de serrage (2) avec un état de fonctionnement réel, des ensembles de données sont générés, lesquels sont évalués par l'interface (21) respective et sont transférés au dispositif de commande (11) du mandrin de serrage (2), aux mâchoires de serrage (4) ou aux moteurs électriques (6).

2. Dispositif d'accouplement selon la revendication 1,
**caractérisé en ce**
**que** deux interfaces (21) effectuent, indépendamment l'une de l'autre, la comparaison entre les états de fonctionnement réels du mandrin de serrage (2) et les états de fonctionnement prescrits.

3. Dispositif d'accouplement selon la revendication 2,
**caractérisé en ce**
**que** les interfaces (21) sont commutées ensemble de manière à ce que les résultats respectifs soient comparés les uns avec les autres.

4. Dispositif d'accouplement selon la revendication 3,
**caractérisé en ce**
**que** la libération pour le démarrage du processus d'usinage ou l'arrêt du processus d'usinage est surveillée et prescrite par les interfaces (21) de telle manière que le processus d'usinage est automatiquement interrompu en cas de divergence des ensembles de données entre deux interfaces (21) ou est libéré en cas de correspondance.

5. Dispositif d'accouplement selon l'une des revendications précédentes,
**caractérisé en ce**
**que** des ensembles de données concernant le mouvement et la position des mâchoires de serrage (4), les états de fonctionnement des moteurs électriques (6) et la force de serrage des mâchoires de serrage (4) sont stockés dans l'interface (21) respective et que les ensembles de données sont comparés en permanence avec les données de mesure mesurées enregistrées par les capteurs de mesure (22).
